# EUROPEAN PATENT APPLICATION

(11) **EP 2 733 000 A1**
(43) Date of publication of application: **21.05.2014**
(21) Application number: 12811298.4
(22) Date of filing: 11.07.2012
(51) Int. Cl.: B60K 6/36, B60K 6/48, B60K 6/547, B60K 20/02, F16H 63/20, F16H 63/32

(54) **MANUAL TRANSMISSION**

(30) Priority: 13.07.2011 JP 2011154447
(71) Applicant: Aisin AI Co., Ltd., Nishio-shi, Aichi 445-0006 (JP)
(72) Inventor: MASUI Yuuki, Nishio-shi Aichi 445-0006 (JP); OSUKA Shinya, Nishio-shi Aichi 445-0006 (JP)
(74) Representative: Ettmayr, Andreas
(86) International application number: PCT/JP2012/067730
(87) International publication number: WO 2013/008855

(57) **Abstract**

The manual transmission of this apparatus includes an input shaft Ai to which power is input from an internal combustion engine E/G through a clutch C/T and an output shaft Ao to which power is input from an electric motor M/G. This transmission has a plurality of EV travel gear stages (EV, EV-R) (different from the neutral) in which no power transmission system is established between the input shaft Ai and the output shaft Ao, and a plurality of HV travel gear stages (2-nd to 5-th) in which a power transmission system is established between the input shaft Ai and the output shaft Ao. On an H-type shift pattern, the shift completion position of one EV travel gear stage for forward travel and the shift completion position of one EV travel gear stage for reverse travel are disposed at opposite ends of a common shift line. Thus, it becomes possible to provide a manual transmission for an HV-MT vehicle which has "HV travel gear stages" and "EV travel gear stages" and which can be made compact.

## Description

### TECHNICAL FIELD

The present invention relates to a manual transmission applied to a vehicle which has an internal combustion engine and an electric motor as power sources, and more particularly to a manual transmission applied to a vehicle which includes a friction clutch disposed between the output shaft of the internal combustion engine and the input shaft of the manual transmission.

### BACKGROUND ART

Conventionally, there has been widely known a so-called hybrid vehicle which includes an engine and an electric motor as power sources (see, for example, Japanese Patent Application Laid-Open (*kokai*) No. 2000-224710). In such a hybrid vehicle, there can be employed a structure in which the output shaft of the electric motor is connected to one of the output shaft of the internal combustion engine, the input shaft of a transmission, and the output shaft of the transmission. In the following description, drive torque from the output shaft of the internal combustion engine will be referred to as "engine drive torque," and drive torque from the output shaft of the electric motor as "motor drive torque."

In recent years, there has been developed a power transmission control apparatus applied to a hybrid vehicle which includes a manual transmission and a friction clutch (hereinafter referred to as an "HV-MT vehicle"). The term "manual transmission" used herein refers to a transmission which does not include a torque converter and whose gear stage is selected in accordance with the shift position of a shift lever operated by a driver (the manual transmission is denoted by MT). Also, the term "friction clutch" used herein refers to a clutch which is interposed between the output shaft of the internal combustion engine and the input shaft of the manual transmission and which is configured such that the engagement state of a friction plate changes in accordance with the operation quantity of a clutch pedal operated by the driver.

### SUMMARY OF THE INVENTION

A hybrid vehicle can realize a state in which the vehicle travels by utilizing engine drive torque and motor drive torque (hereinafter referred to as "HV travel"). In recent years, there has been developed a hybrid vehicle which can realize not only such HV travel but also a state in which the vehicle travels by utilizing only the motor drive torque, while maintaining the internal combustion engine in a stopped state (a state in which the rotation of the output shaft of the internal combustion engine stops) (hereinafter referred to as "EV travel").

In order to enable an HV-MT vehicle to realize EV travel in a state in which a driver does not operate a clutch pedal (namely, in a state in which the clutch of the vehicle is engaged), it is necessary to drive the output shaft of the transmission by utilizing motor drive torque while maintaining a state in which the input shaft of the transmission does not rotate. In order to realize this, it is necessary to connect the output shaft of the electric motor to the output shaft of the transmission and to maintain the transmission in a "state in which no power transmission system is established between the input shaft of the transmission and the output shaft of the transmission."

Here, there is assumed a manual transmission which has an "input shaft to which power is input from an internal combustion engine (through a clutch)" and an "output shaft to which power is input from an electric motor (namely, to which the output shaft of the electric motor is always connected in a power transmissible manner)." In this manual transmission, motor drive torque can be arbitrarily transmitted to the output shaft of the manual transmission (accordingly, to drive wheels) irrespective of whether or not a power transmission system is established between the input shaft and the output shaft.

Accordingly, in order to realize not only HV travel but also the above-mentioned EV travel by utilizing such a manual transmission, the manual transmission must have not only "gear stages in which a power transmission system is established between the input shaft and the output shaft of the transmission" for HV travel (hereinafter referred to as "HV travel gear stages") but also a "gear stage in which no power transmission system is established between the input shaft and the output shaft of the transmission" for EV travel (gear stage different from the neutral) (hereinafter referred to as an "EV travel gear stage").

Namely, in this manual transmission, when the shift lever is moved on a shift pattern to one of HV travel shift completion positions corresponding to a plurality of HV travel gear stages, a power transmission system having a "speed reduction ratio" corresponding to the corresponding HV travel gear stage is established between the input shaft and the output shaft, and when the shift lever is moved on the shift pattern to an EV travel shift completion position (different from the neutral position) corresponding to the EV travel gear stage, no power transmission system is established between the input shaft and the output shaft.

Incidentally, the present applicant has already proposed a manual transmission for an HV-MT vehicle of such a type (see, for example, Japanese Patent Application No. 2011-92124). This application discloses a manual transmission which includes only a single EV travel gear stage for forward travel (corresponding to 1-st for forward starting) as an EV travel gear stage on the shift pattern. This configuration allows a driver to perform forward starting while utilizing EV travel. In addition, since a gear pair for 1-st for forward travel (specifically, a combination of a fixed gear for 1-st and an idle gear for 1-st which are always meshed with each other) can be eliminated, the entire transmission can be made compact.

As a result of further consideration and studies, the present applicant developed a manual transmission of such a type which can be made more compact. An object of the present invention is to provide a manual transmission which has "HV travel gear stages" and "EV travel gear stages" and which can be made compact.

The feature of a manual transmission according to the present invention resides in that, in addition to HV travel shift completion positions corresponding to a plurality of "HV travel gear stages" (for forward travel), EV travel shift completion positions corresponding to a plurality of "EV travel gear stages" are provided on a shift pattern, and one or more "EV travel gear stages" for forward travel and one or more "EV travel gear stages" for reverse travel are provided as the plurality of "EV travel gear stages."

According to this configuration, not only forward starting performed through utilization of EV travel, but also reverse starting performed through utilization of EV travel becomes possible. Further, not only the gear pair for 1-st for forward travel (specifically, a combination of a fixed gear for 1-st and an idle gear for 1-st which are always meshed with each other), but also the gear pair for reverse travel (specifically, a combination of a fixed gear for reverse travel, an idle gear for reverse travel, an idle gear, etc.) is eliminated. Accordingly, the entire transmission can be made more compact.

The manual transmission according to the present invention may employ a so-called "H-type" shift pattern which is composed of a single selection line and a plurality of shift lines intersecting with the selection line. In the case where such an H-type shift pattern is employed, and one "EV travel gear stage" for forward travel and one "EV travel gear stage" for reverse travel are provided as the plurality of "EV travel gear stages," it is preferred that the shift completion positions of the "EV travel gear stage" for forward travel and the "EV travel gear stage" for reverse travel be disposed at opposite ends of a common (same) shift line on the shift pattern. By virtue of this configuration, the number of required fork shafts can be reduced by one as described in detail later, whereby the entire transmission can be made further compact.

### BRIEF DESCRIPTION OF THE DRAWINGS

FIG. 1 is a schematic diagram of a power transmission control apparatus for an HV-MT vehicle according to an embodiment of the present invention in a state in which an N position is selected.
FIG. 2 is a schematic diagram showing the positional relation between an S&S shaft and a plurality of fork shafts in a state in which the N position is selected.
FIG. 3 is a schematic view showing the state of engagement between "sleeves and fork shafts" and an S&S shaft.
FIG. 4 is a diagram showing the detail of the shift pattern.
FIG. 5 is a diagram corresponding to FIG. 1 in a state in which a position for EV is selected.
FIG. 6 is a diagram corresponding to FIG. 2 in a state in which the position for EV is selected.
FIG. 7 is a diagram corresponding to FIG. 1 in a state in which a position for EV-R is selected.
FIG. 8 is a diagram corresponding to FIG. 2 in a state in which the position for EV-R is selected.
FIG. 9 is a diagram corresponding to FIG. 1 in a state in which a position for 2-nd is selected.
FIG. 10 is a diagram corresponding to FIG. 2 in a state in which the position for 2-nd is selected.
FIG. 11 is a diagram corresponding to FIG. 1 in a state in which a position for 3-rd is selected.
FIG. 12 is a diagram corresponding to FIG. 2 in a state in which the position for 3-rd is selected.
FIG. 13 is a diagram corresponding to FIG. 1 in a state in which a position for 4-th is selected.
FIG. 14 is a diagram corresponding to FIG. 2 in a state in which the position for 4-th is selected.
FIG. 15 is a diagram corresponding to FIG. 1 in a state in which a position for 5-th is selected.
FIG. 16 is a diagram corresponding to FIG. 2 in a state in which the position for 5-th is selected.

### MODE FOR CARRYING OUT THE INVENTION

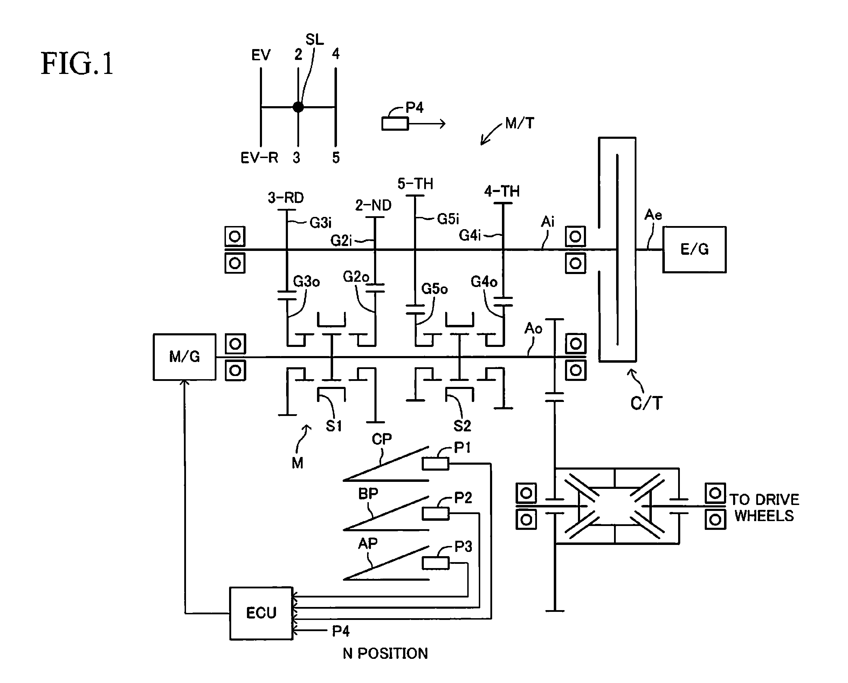

A power transmission control apparatus of a vehicle which includes a manual transmission according to an embodiment of the present invention (hereinafter referred to as the "present apparatus") will now be described with reference to the drawings. As shown in FIG. 1, the present apparatus is applied to a "vehicle which includes an engine E/G and a motor generator M/G as power sources, and also includes a manual transmission M/T, which does not include a torque converter, and a friction clutch CIT"; i.e., the above-described "HV-MT vehicle." This "HV-MT vehicle" may be a front wheel drive vehicle, a rear wheel drive vehicle, or a four wheel drive vehicle.

### (Overall Structure)

First, the overall structure of the present apparatus will be described. The engine E/G is a well known internal combustion engine, such as a gasoline engine which uses gasoline as fuel, or a diesel engine which uses light oil as fuel.

The manual transmission M/T is a transmission which does not include a torque converter and whose gear stage is selected in accordance with the shift position of a shift lever SL operated by a driver. The manual transmission M/T has an input shaft Ai to which power is input from an output shaft Ae of the engine E/G, and an output shaft Ao to which power is input from the motor generator M/G and from which power is output to drive wheels of the vehicle. The input shaft Ai and the output shaft Ao are disposed parallel with each another. The output shaft Ao may be the output shaft of the motor generator M/G itself or a shaft which is parallel to the output shaft of the motor generator M/G and is always connected to the output shaft of the motor generator M/G in a power transmissible manner through a gear train. The details of the structure of the manual transmission M/T will be described later.

The friction clutch C/T is disposed between the output shaft Ae of the engine E/G and the input shaft Ai of the manual transmission M/T. The friction clutch C/T is a well known clutch configured such that the engagement state of a friction plate (more specifically, the axial position of a friction plate, which rotates together with the input shaft Ai, in relation to a fry-wheel, which rotates together with the output shaft Ae) changes in accordance with an operation quantity (depression amount) of a clutch pedal CP operated by the driver.

The engagement state of the friction clutch C/T (the axial position of the friction plate) may be mechanically adjusted in accordance with the operation quantity of the clutch pedal CP, by making use of a link mechanism or the like which mechanically connects the clutch pedal CP to the friction clutch C/T (the friction plate). Alternatively, the engagement state of the friction clutch C/T may be electrically adjusted by making use of drive force of an actuator which operates in accordance with the result of detection by a sensor (a sensor P1 to be described later) which detects the operation quantity of the clutch pedal CP (by a so-called by-wire scheme).

The motor generator M/G has a well known structure (e.g., an AC synchronous motor), and, for example, its rotor (not illustrated) rotates together with the output shaft Ao. Namely, a power transmission system is always established between the output shaft of the motor generator M/G and the output shaft Ao of the manual transmission M/T. In the following description, drive torque from the output shaft Ae of the engine E/G will be referred to as "EG torque," and drive torque from the output shaft of the motor generator M/G (output shaft Ao) as "MG torque."

The present apparatus includes a clutch operation quantity sensor P1 which detects the operation quantity (depression amount, clutch stroke, etc.) of the clutch pedal CP, a brake operation quantity sensor P2 which detects the operation quantity (depression force, presence/absence of operation, etc.) of a brake pedal BP, an accelerator operation quantity sensor P3 which detects the operation quantity (accelerator opening) of an accelerator pedal AP, and a shift position sensor P4 which detects the position of the shift lever SL.

Moreover, the present apparatus includes an electronic control unit (hereinafter simply referred to as the "ECU"). On the basis of information, among others, from the above-mentioned sensors P1 to P4 and other sensors, etc., the ECU controls the EG torque by controlling the fuel injection amount of the engine E/G (opening of its throttle valve) and controls the MG torque by controlling an inverter (not shown).

### (Structure of the manual transmission M/T)

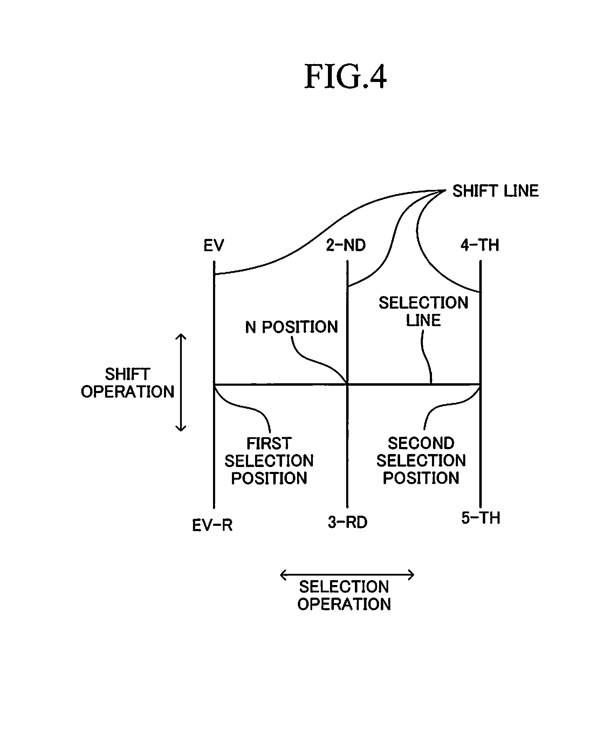

The structure of the manual transmission M/T will be described specifically with reference to FIGS. 1 to 4. As shown in FIGS. 1 and 4, the shift pattern of the shift lever SL employed in the present example is a so-called "H-type" shift pattern which is composed of a single selection line (a line extending in the left-right direction of the vehicle) and three shift lines (lines extending in the front-rear direction of the vehicle) intersecting with the selection line.

In the present example, five forward gear stages (EV, 2-nd through 5-th) and a single reverse gear stage (EV-R) are provided as selectable gear stages (shift completion positions). "EV" and "EV-R" are the above-described EV travel gear stages, and "2-nd" through "5-th" are the above-described HV travel gear stages. In the following, in order to facilitate description, a range in which the selection operation can be performed and which includes the "N position," the "first selection position," and the "second selection position" will be collectively referred to as a "neutral range."

The manual transmission M/T includes sleeves S1 and S2. The sleeves S1 and S2 are a sleeve for "2-nd - 3-rd" and a sleeve for "4-th - 5-th" which are fitted onto corresponding hubs which rotate together with the output shaft Ao such that the sleeves cannot rotate relative to the corresponding hubs but can move in the axial direction relative to the corresponding hubs.

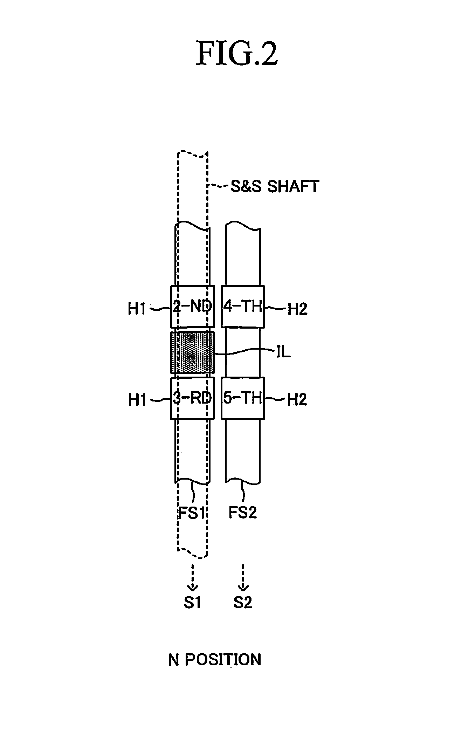

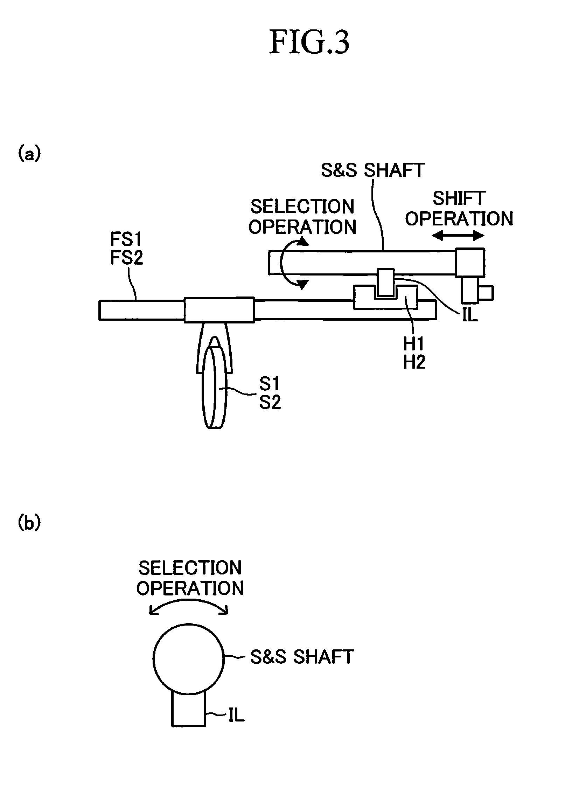

As shown in FIGS. 2 and 3, the sleeves S1 and S2 are integrally coupled with fork shafts FS1 and FS2 shown (via corresponding forks). The fork shafts FS1 and FS2 (i.e., the sleeves S1 and S2) are driven in the axial direction (in the vertical direction in FIG. 2 and in the left-right direction in FIGS. 1 and 3) by an inner lever IL (see FIGS. 2 and 3) provided on an S&S shaft which moves as a result of operation of the shift lever SL.

In FIGS. 2 and 3, the S&S shaft is a "selection rotation type." Namely, the S&S shaft is translated in the axial direction as a result of a shift operation (operation in the vertical direction in FIGS. 1 and 4) of the shift lever SL, and is rotated about the axis thereof as a result of a selection operation (operation in the left-right direction in FIGS. 1 and 4) of the shift lever SL. However, the S&S shaft may be a "shift rotation type" S&S shaft which is rotated about the axis as a result of a shift operation of the shift lever SL and is translated in the axial direction as a result of a selection operation of the shift lever SL.

As shown in FIG. 3, shift heads H1 and H2 are integrally provided on the fork shafts FS1 and FS2. When the position of the shift lever SL moves toward the front side or rear side of the vehicle from the "N position" or the "second selection position" as a result of a shift operation (operation in the front-rear direction of the vehicle); i.e., when the axial position (position in the left-right direction in FIG. 3) of the inner lever IL moves toward the front side or the rear side from a reference position corresponding to the "N position" or the "second selection position" of the shift lever SL, the inner lever IL pushes the shift head H1 or H2 in the axial direction, whereby the fork shaft FS1 or FS2 (i.e., the sleeve S1 or S2) moves in the corresponding direction from the "neutral position."

Meanwhile, even when the position of the shift lever SL moves toward the front side or rear side of the vehicle from the "first selection position" as a result of a shift operation; i.e., even when the axial position of the inner lever IL moves toward the front side or the rear side from the reference position corresponding to the "first selection position" of the shift lever SL, no shift head (i.e., fork shaft) engages with the inner lever IL. Accordingly, the fork shafts FS1 and FS2 (i.e., the sleeves S1 and S2) are maintained at their "neutral positions." Next, the gear stages will be described one by one. Notably, in the following description, the state in which the shift lever SL is located at the shift completion position of a certain gear stage may be expressed by a phrase "that gear stage is selected."

As shown in FIGS. 1 and 2, in a state in which the shift lever SL is located at the "N position" (more precisely, within the neutral range), the sleeves S1 and S2 are located at their "neutral positions." In this state, the sleeves S1 and S2 do not engage with corresponding idle gears. Namely, no power transmission system is established between the input shaft Ai and the output shaft Ao. Also, the MG torque is maintained at "zero." Namely, none of the EG torque and the MG torque is transmitted to the drive wheels.

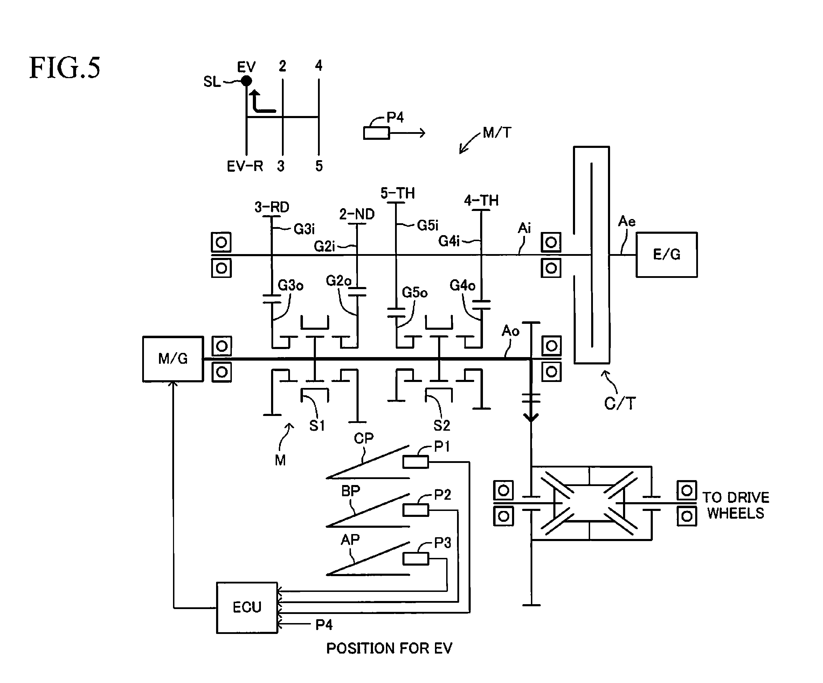

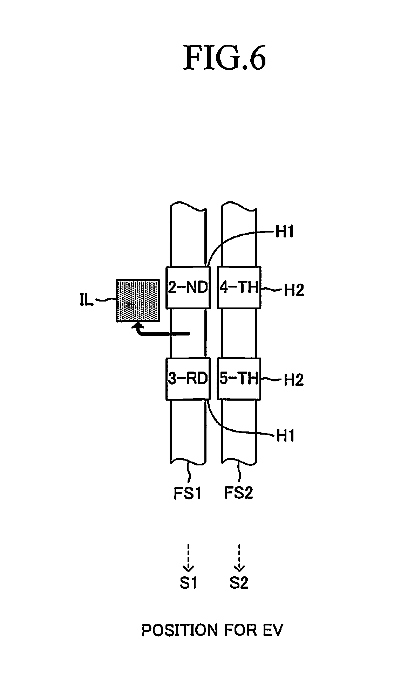

As shown in FIGS. 5 and 6, in the case where the shift lever SL moves from the "N position" to a "shift completion position for EV" (via the first selection position), as described above, no shift head (i.e., fork shaft) engages with the inner lever IL of the S&S shaft. Thus, the fork shafts FS1 and FS2 (i.e., the sleeves S1 and S2) are maintained at their "neutral positions." Accordingly, no power transmission system is established between the input shaft Ai and the output shaft Ao. Meanwhile, in this case, as indicated by a thick continuous line in FIG. 5, an MG torque for forward travel is transmitted to the drive wheels through the power transmission system between the motor generator M/G and the output shaft Ao.

Namely, when "EV" is selected, there is realized a state (namely, the above-mentioned "EV travel") in which the vehicle travels by utilizing the MG torque only while maintaining the engine E/G in a stopped state (a state in which the rotation of the output shaft Ae of the engine E/G stops). Namely, in this vehicle, the driver can start the vehicle in the forward direction by EV travel by selecting "EV." The MG torque is adjusted to a value for forward travel whose magnitude changes in accordance with the accelerator opening or the like.

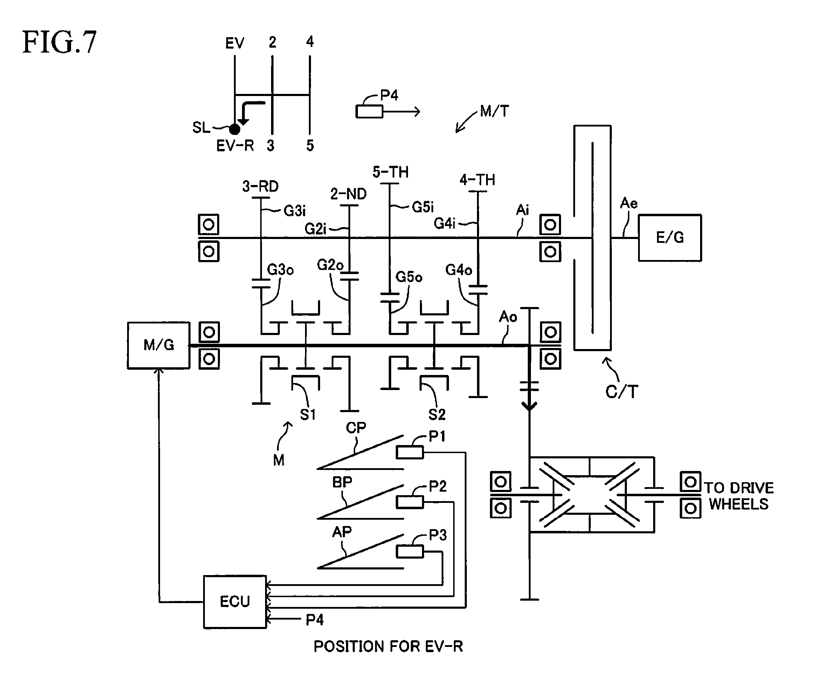

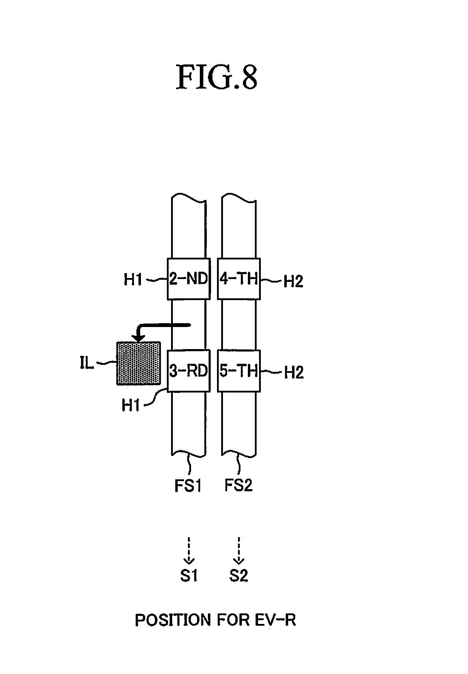

As shown in FIGS. 7 and 8, in the case where the shift lever SL moves from the "N position" to a "shift completion position for EV-R" (via the first selection position), no shift head (i.e., fork shaft) engages with the inner lever IL as in the above-described case where "EV" is selected. Thus, the fork shafts FS1 and FS2 (i.e., the sleeves S1 and S2) are maintained at their "neutral positions." Accordingly, no power transmission system is established between the input shaft Ai and the output shaft Ao. Meanwhile, in this case, as indicated by a thick continuous line in FIG. 7, an MG torque for reverse travel is transmitted to the drive wheels through the power transmission system between the motor generator M/G and the output shaft Ao.

Namely, when "EV-R" is selected, the "EV travel" is realized. Namely, in this vehicle, the driver can start the vehicle in the reverse direction by EV travel by selecting "EV-R." The MG torque is adjusted to a value for reverse travel whose magnitude changes in accordance with the accelerator opening or the like.

Notably, distinction of the position of the shift lever SL among the "N position" (neutral range), the "shift completion position for EV," and the "shift completion position for EV-R" can be made on the basis of, for example, the result of detection by the shift position sensor P4 and the result of detection by a sensor which detects the position of the S&S shaft.

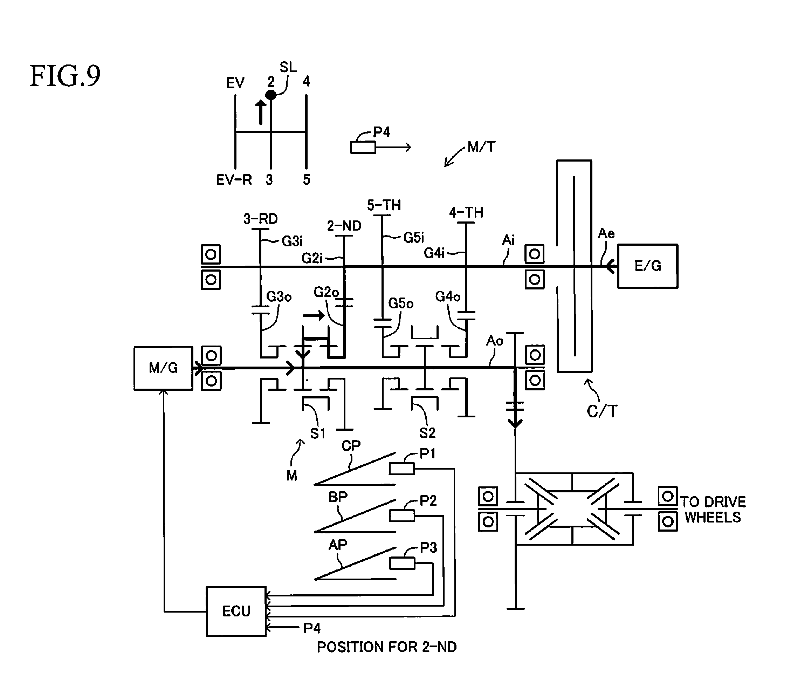

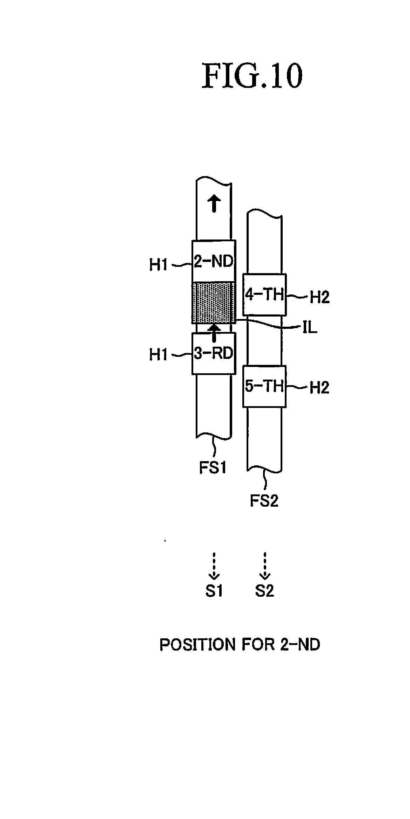

As shown in FIGS. 9 and 10, when the shift lever SL moves from the "N position" to the "shift completion position for 2-nd," the inner lever IL of the S&S shaft drives the "2-nd-side engagement portion" of the shift head H1 connected to the fork shaft FS1 in the "2-nd" direction (in the upward direction in FIG. 10), whereby only the fork shaft FS1 (i.e., the sleeve S1) is driven (in the upward direction in FIG. 10, the rightward direction in FIG. 9). As a result, the sleeve S1 moves to the "position for 2-nd." The sleeve S3 is located at the "neutral position."

In this state, the sleeve S1 engages with an idle gear G2o and fixes the idle gear G2o to the output shaft Ao such that the idle gear G2o cannot rotate relative to the output shaft Ao. Also, the idle gear G2o is always meshed with a fixed gear G2i fixed to the input shaft Ai. As a result, as indicated by a thick continuous line in FIG. 9, in addition to the power transmission system between the motor generator M/G and the output shaft Ao, a power transmission system corresponding to "2-nd" is established between the input shaft Ai and the output shaft Ao through the gears G2i and G2o. Namely, in the case where "2-nd" is selected, there is realized a state (namely, the above-mentioned "HV travel") in which the vehicle travels by utilizing both the EG torque transmitted through the clutch C/T and the MG torque.

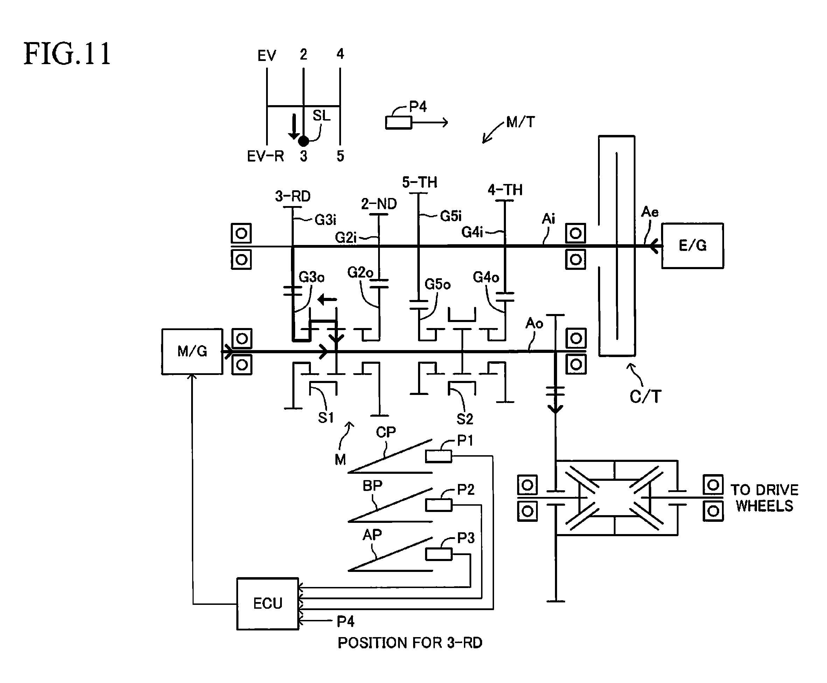

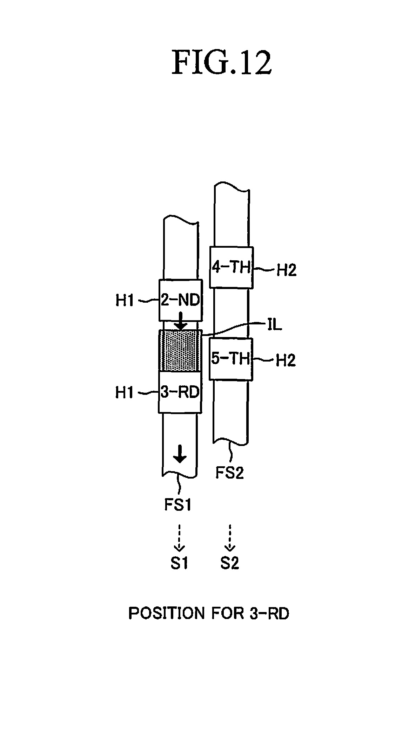

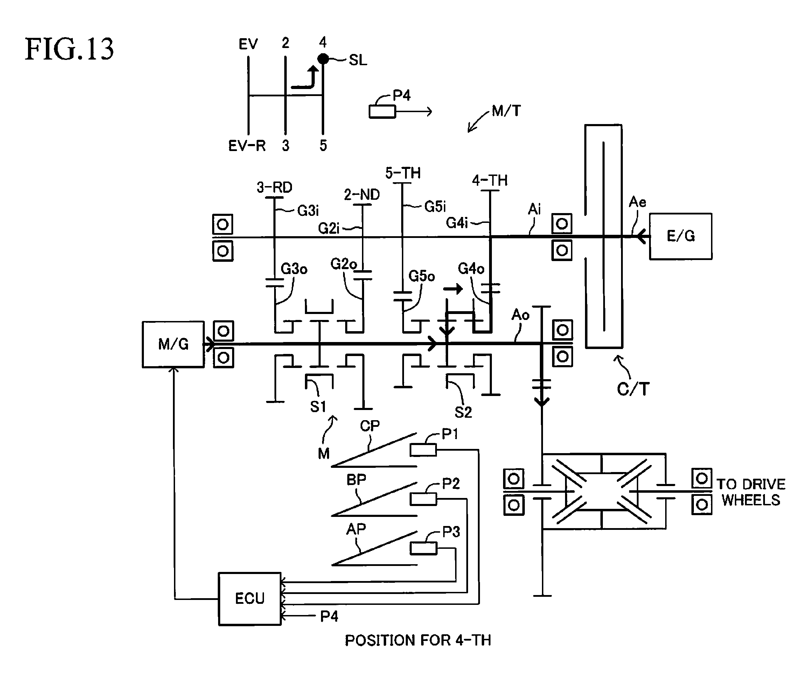

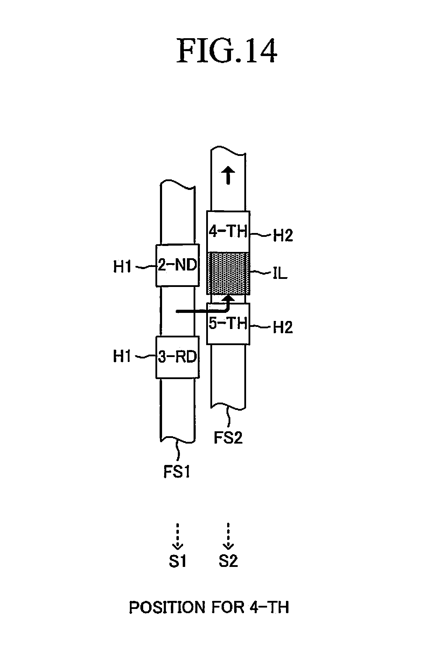

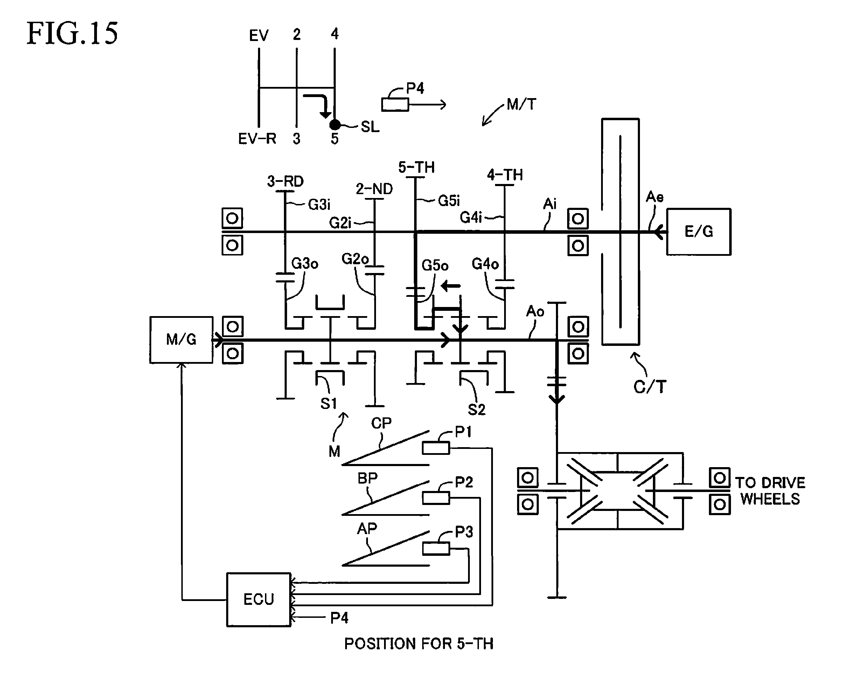

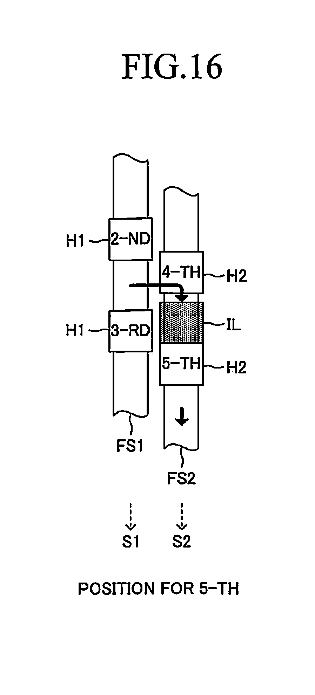

As shown in FIGS. 11 to 16, in the case where the shift lever SL is located at the shift completion position for "3-rd," "4-th," or "5-th" as well, as in the case where the shift lever SL is located at the shift completion position for "2-nd," the above-mentioned "HV travel" is realized. Namely, when the shift lever SL is moved to the shift completion position for "3-rd" ("4-th," "5-th"), in addition to the power transmission system between the motor generator M/G and the output shaft Ao, a power transmission system corresponding to "3-rd" ("4-th," "5-th") is established between the input shaft Ai and the output shaft Ao through gears G3i and G3o (G4i and G4o, G5i and G5o).

As described above, in the present example, "EV" and "EV-R" are EV travel gear stages, and "2-nd" through "5-th" are HV travel gear stages. Notably, for the system for transmitting the EG torque, the "ratio of the rotational speed of the input shaft Ai to that of the output shaft Ao" will be referred to as an "MT speed reduction ratio." The MT speed reduction ratio (the number of teeth of GNo/the number of teeth of GNi) (N: 2 to 5) decreases gradually from "2-nd" toward "5-th."

Notably, in the above-described example, the axial positions of the sleeves S1 and S2 are mechanically adjusted in accordance with the shift position of the shift lever SL through utilization of a link mechanism (the S&S shaft and the fork shafts) or the like which mechanically connect the shift lever SL and the sleeves S1 and S2. However, the axial positions of the sleeves S1 and S2 may be electrically adjusted by making use of drive force of an actuator which operates on the basis of the result of detection by the shift position sensor P4 (so-called by-wire scheme).

### (Control of the engine E/G)

The control of the engine E/G by the present apparatus is generally performed as follows. When the vehicle is stopped or "N," "EV," or "EV-R" is selected, the engine E/G is maintained in a stopped state (a state in which fuel injection is not performed). When an HV travel gear stage (any of "2-nd" to "5-th") is selected in a state in which the engine E/G is stopped, the engine E/G is started (fuel injection is started). In periods during which the engine E/G is operating (fuel injection is being performed), the EG torque is controlled on the basis of the accelerator opening, etc. When "N," "EV," or "EV-R" is selected or the vehicle stops in a state the engine E/G is operating, the engine E/G is again maintained in the stopped state.

### (Control of the motor generator M/G)

The control of the motor generator M/G by the present apparatus is generally performed as follows. When the vehicle is stopped or "N" is selected, the motor generator M/G is maintained in a stopped state (the MG torque = 0). When "EV" or "EV-R" is selected, the MG torque is adjusted to a value for EV travel on the basis of the accelerator opening, the clutch stroke, etc. (MG torque control for EV travel). Meanwhile, when an HV travel gear stage (any of "2-nd" through "5-th") is selected, the MG torque is adjusted to a value for HV travel on the basis of the accelerator opening, the clutch stroke, etc. (MG torque control for HV travel). The MG torque control for EV travel and the MG torque control for HV travel differ from each other in terms of the magnitude of the adjusted MG torque. When "N" is selected or the vehicle is stopped, the motor generator M/G is again maintained in a stopped state.

### (Action and effects)

As described above, the manual transmission M/T according to the embodiment of the present invention allows not only forward starting performed through utilization of EV travel but also reverse starting performed through utilization of EV travel. As a result, not only the gear pair for 1-st for forward travel (specifically, a combination of a fixed gear for 1-st and an idle gear for 1-st which are always meshed with each other), but also the gear pair for reverse travel (specifically, a combination of a fixed gear for reverse travel, an idle gear for reverse travel, an idle gear, etc.) is eliminated (see FIG. 1, etc.). Accordingly, as compared with a transmission which includes both of the gear pair for 1-st for forward travel and the gear pair for reverse travel, the entire transmission can be made more compact.

Also, in the above-described embodiment, on the H-type shift pattern, the "shift completion position for EV" and the "shift completion position for EV-R" are disposed at the opposite ends of a common (same) shift line. In general, fork shafts which are equal in number to the shift lines present on the H-type shift pattern are required. In contrast, according to the above-described configuration, the transmission includes only two fork shafts in spite of employment of an H-type shift pattern having three shift lines (see FIG. 2, etc.). Namely, the number of required fork shafts can be reduced by one, whereby the entire transmission can be made further compact.

The present invention is not limited to the above-described embodiment, and various modifications may be employed without departing from the scope of the present invention. For example, in the above-described embodiment, both of the sleeves S1 and S2 are provided on the input shaft Ai. However, both of the sleeves S1 and S2 may be provided on the output shaft Ao. Alternatively, one of the sleeves S1 and S2 may be provided on the output shaft Ao, and the other sleeve may be provided on the input shaft Ai. Also, the order of arrangement of the plurality of gear pairs disposed on the input shaft Ai and the output shaft Ao may differ from that employed in the above-described embodiment.

In the above-described embodiment, the "shift completion position for EV" and the "shift completion position for EV-R" are disposed at opposite ends of a common (same) shift line. However, the "shift completion position for EV" and the "shift completion position for EV-R" may be disposed at ends of different shift lines.

In addition, in the above-described embodiment, a single EV travel gear stage for forward travel and a single EV travel gear stage for reverse travel are provided on the shift pattern as a plurality of EV travel gear stages. However, a plurality of EV travel gear stages for forward travel or a plurality of EV travel gear stages for reverse travel may be provided. In this case, it is preferred that the "ratio of the rotational speed of the output shaft of the motor generator M/G to the rotational speed of the output shaft Ao" (MG speed reduction ratio) differ among the plurality of EV travel gear stages for forward travel or reverse travel.

## Claims

1. A manual transmission (M/T) having no torque converter, which is applied to a vehicle including an internal combustion engine (E/G) and an electric motor (M/G) as power sources, comprising:
an input shaft (Ai) to which power is input from the internal combustion engine;
an output shaft (Ao) to which power is input from the electric motor and from which power is output to a drive wheel of the vehicle; and
a transmission speed change mechanism (M) configured such that, when a shift operation member (SL) operated by a driver moves, on a shift pattern, to each of hybrid travel shift completion positions corresponding to a plurality of hybrid travel gear stages (2-nd to 5-th) for traveling in a state in which drive forces of both of the internal combustion engine and the electric motor can be used, the transmission speed change mechanism establishes a power transmission system between the input shaft and the output shaft such that a transmission speed reduction ratio, which is the ratio of rotational speed of the input shaft to that of the output shaft, is set to a value corresponding to a corresponding hybrid travel gear stage, and when the shift operation member moves, on the shift pattern, to each of motor travel shift completion positions corresponding to a plurality of motor travel gear stages (EV, EV-R) for traveling by using the drive force of the electric motor only, the transmission speed change mechanism establishes no power transmission system between the input shaft and the output shaft, wherein
the transmission speed change mechanism includes, as the plurality of motor travel gear stages, one or more motor travel gear stages for forward travel and one or more motor travel gear stages for reverse travel.

2. A manual transmission according to claim 1, wherein
the shift pattern includes:
a single selection line extending in a left-right direction of the vehicle which is a path along which the shift operation member moves in the left-right direction of the vehicle as a result of a selection operation, which is an operation of the shift operation member in the left-right direction of the vehicle, in a neutral state in which no power transmission system is established between the input shaft and the output shaft; and
a plurality of shift lines each of which is a path along which the shift operation member moves in a front-rear direction of the vehicle as a result of a shift operation, which is an operation of the shift operation member in the front-rear direction of the vehicle, from a corresponding one of a plurality of selection positions on the selection line, each shift line extending from the corresponding selection position toward one side or both sides with respect to the front-rear direction of the vehicle, and a corresponding shift completion position being disposed at each end of each shift line;
wherein the transmission speed change mechanism includes, as the plurality of motor travel gear stages, one motor travel gear stage for forward travel and one motor travel gear stage for reverse travel;
the motor travel gear stage for forward travel and the motor travel gear stage for reverse travel share a corresponding common selection position for motor travel among the plurality of selection positions, the shift completion position of the motor travel gear stage for forward travel being disposed at one of opposite ends of a motor travel shift line, among the plurality of shift lines, which extends from the motor travel selection position toward both sides with respect to the front-rear direction of the vehicle, and the shift completion position of the motor travel gear stage for reverse travel being disposed at the other of the opposite ends of the motor travel shift line; and
the plurality of hybrid travel gear stages have at least one hybrid travel selection position which is one of the plurality of selection positions and differs from the motor travel selection position, a corresponding hybrid travel shift completion position being disposed at each end of at least one hybrid travel shift line, among the plurality of shift lines, which extends from the at least one hybrid travel selection position, and
wherein the transmission speed change mechanism includes:
a plurality of fixed gears (G2i, G3i, G4i, G5i) which are non-rotatably provided on the input shaft (Ai) or the output shaft (Ao) and which correspond to the plurality of hybrid travel gear stages;
a plurality of idle gears (G2o, G3o, G4o, G5o) which are rotatably provided on the input shaft or the output shaft, which correspond to the plurality of hybrid travel gear stages, and which are always meshed with the fixed gears of the corresponding hybrid travel gear stages;
a plurality of sleeves (S1, S2) which are non-rotatably and axially movably provided on the corresponding shaft of the input and output shafts and each of which can be engaged with the corresponding idle gear of the plurality of idle gears so as to fix the corresponding idle gear to the corresponding shaft such that the corresponding idle gear cannot rotate relative to the corresponding shaft;
a plurality of fork shafts (FS1, FS2) each of which is connected to a corresponding one of the plurality of sleeves and can move in an axial direction thereof; and
a shift and selection shaft which is moved in an axial direction thereof or is rotated about its axis as a result of the selection operation of the shift operation member, and is rotated about its axis or is moved in the axial direction as a result of the shift operation of the shift operation member, wherein
when the shift operation member is located at the hybrid travel selection position as a result of the selection operation, a corresponding fork shaft is selected from the plurality of fork shafts, and an inner lever (IL) projecting from a side surface of the shift and selection shaft pushes and moves the selected fork shaft in the axial direction thereof as a result of the shift operation of the shift operation member, whereby the corresponding hybrid travel gear stage is realized; and
when the shift operation member is located at the motor travel selection position as a result of the selection operation, no fork shaft is selected from the plurality of fork shafts.
